# EUROPEAN PATENT APPLICATION

(11) **EP 2 067 507 A1**
(43) Date of publication of application: **10.06.2009**
(21) Application number: 07122607.0
(22) Date of filing: 07.12.2007
(51) Int. Cl.: A63F 13/02

(54) **Game console remote controller integration**

(71) Applicant: Madcow International Group Limited, Hong Kong, Kowloon (CN)
(72) Inventor: Wu, Shing-Wai David, Hong Kong (CN)
(74) Representative: Bankes, Stephen Charles Digby

(57) **Abstract**

A set of components is designed for use with proprietary game console controllers. The proprietary controllers include a first hand-held controller (11) having a transmitter (19) for wirelessly transmitting first control signals corresponding to user-input at the first controller to the game console. A second hand-held controller (10) has a cable (12) with a plug (13) which would ordinarily be inserted into the socket (14) of the first controller whereupon the first transmitter would hereinbefore relay second control signals corresponding to user-input at the second controller via the cable to the game console. The set of components "unties" the two controllers and includes a wireless receiver (19) having a plug (20) for insertion to the socket; a cradle (15) for receiving the second controller and including a second transmitter (21) having a second socket (18) into which the plug (13) of the cable (12) is received. The second transmitter (21) transmits the second control signals. The receiver (19) is tuned to receive the second control signals and the first transmitter also transmits the second control signals to the game console.

## Description

### Background of the Invention

The present invention relates to remote controllers for video game consoles. The invention more particularly although not exclusively relates to the integration of several remote controllers for use with the Nintendo^{™} Wii^{™} console.

Sony PlayStatior^{™}, Microsoft Xbox^{™} and Nintendo Wii^{™} are popular video game console systems with which interactive video games are played. Such systems have various controller devices such as joysticks, remote controllers, steering wheels and other input devices.

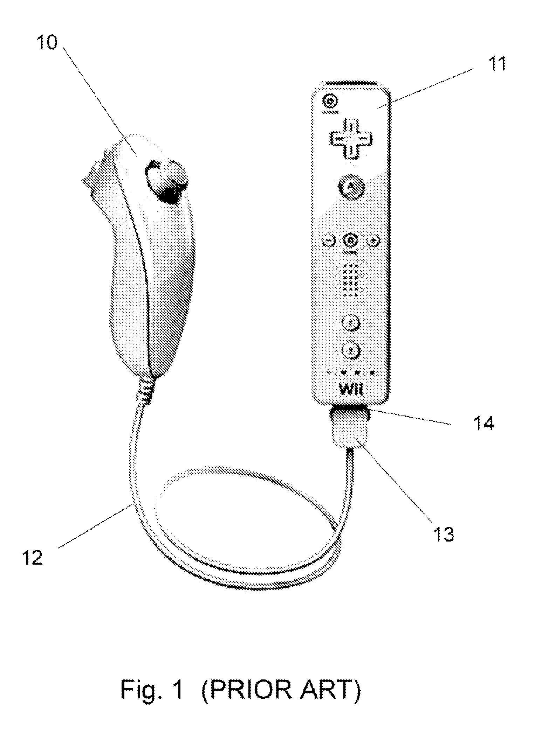

The Nintendo Wii^{™} console receives wireless signals from a hand-held remote controller. An optional feature for connection by cable to the wireless remote controller is known as a "Nunchuk^{™} attachment". A Nunchuk^{™} attachment 10 is shown connected by its cable 12 to a standard Wii^{™} remote controller 11 in Fig. 1. The standard remote controller 11 is provided with a socket 14 into which the plug 13 upon cable 12 is inserted. It is intended that the user hold and manipulate the remote controller 11 with one hand and the Nunchuk^{™} attachment 10 with the other hand.

The cable extending between the two hand-held controllers is cumbersome and can therefore interfere with gameplay.

### Objects of the Invention

It is an object of the present invention to overcome or substantially ameliorate the above disadvantage and/or more generally to provide improved integration of a pair of controller devices for a game console.

### Disclosure of the Invention

There is disclosed herein a system for controlling a game console, comprising:
a first hand-held controller comprising a first transmitter for wirelessly transmitting first control signals corresponding to user input at the first controller to the game console; and
a second hand-held controller;
characterised in that:
the first controller comprises a receiver and the second controller comprises a transmitter for wirelessly transmitting second control signals corresponding to user input at the second controller to the receiver, and the receiver is tuned to receive said second control signals from the second transmitter and further characterised in that the first transmitter relays the second control signals to the game console.

Preferably, the system is further characterised in that the receiver is plugged into the first controller.

Preferably, the system is further characterised in that the second controller is plugged into the second transmitter.

Preferably, the system is further characterised by a cradle receiving the second controller.

Preferably, the system is further characterised in that the second transmitter is located in the cradle.

Preferably, the system is further characterised in that the second transmitter comprises a socket, and the second controller has extending from it a cable having a plug inserted into the socket.

Preferably, the system is further characterised in that the cradle comprises a cover for covering at least a portion of the cable.

There is further disclosed herein a set of components for use with proprietary game console controllers, the proprietary game console controllers including: a first hand-held controller comprising a first transmitter for wirelessly transmitting first control signals corresponding to user-input at the first controller to the game console, and a socket; and a second hand-held controller comprising a cable with a plug for insertion into the socket of the first controller whereupon the first transmitter would hereinbefore relay second control signals corresponding to user-input at the second controller via the cable, plug and socket to the game console; the set of components characterised by:
a wireless receiver having a plug for insertion to the socket;
a cradle for receiving the second controller and including a second transmitter having a second socket into which the plug of the cable is received, the second transmitter transmitting said second control signals; wherein:
   the receiver is tuned to receive the second control signals and wherein the first transmitter also transmits the second control signals to the game console.

Preferably, the system is further characterised in that the cradle comprises a cover for covering at least a portion of the cable.

### Brief Description of the Drawings

A preferred form of the present invention will now be described by way of example with reference to the accompanying drawings, wherein:
Fig. 2 is a schematic perspective illustration of add-on apparatus for use with a Nintendo Wii^{™} console remote controller and Nunchuk^{™} attachment;
Fig. 3 is a schematic perspective illustration showing the add-on apparatus of Fig. 2 together with the proprietary Nintendo^{™} remote controller and Nunchuk^{™}; and
Fig. 4 is a schematic perspective illustration showing the proprietary devices having the add-on apparatus attached thereto in use.

### Description of the Preferred Embodiment

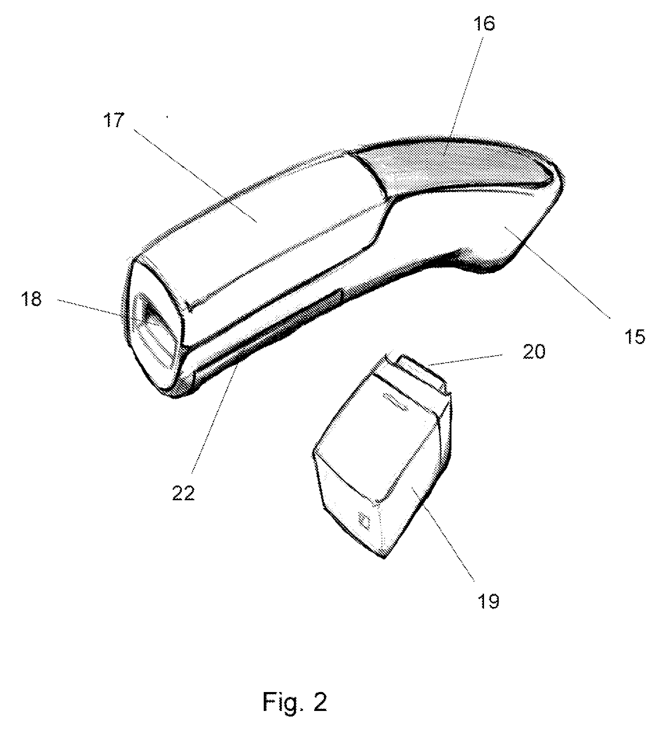

In Fig. 2 of the accompanying drawings there is depicted schematically a cradle 15 having an opening 16 and a cover 17 which is typically snap-engaged upon the cradle. At the proximal end of the cradle/cover there is a socket 18. At the bottom of the cradle, there is provided a battery cover 22 over a battery compartment (not shown). Also depicted in Fig. 2 is a receiver 19 having an electrical plug 20. Plug 20 is provided with a pin-configuration corresponding to that of standard plug 13 shown in Fig. 1.

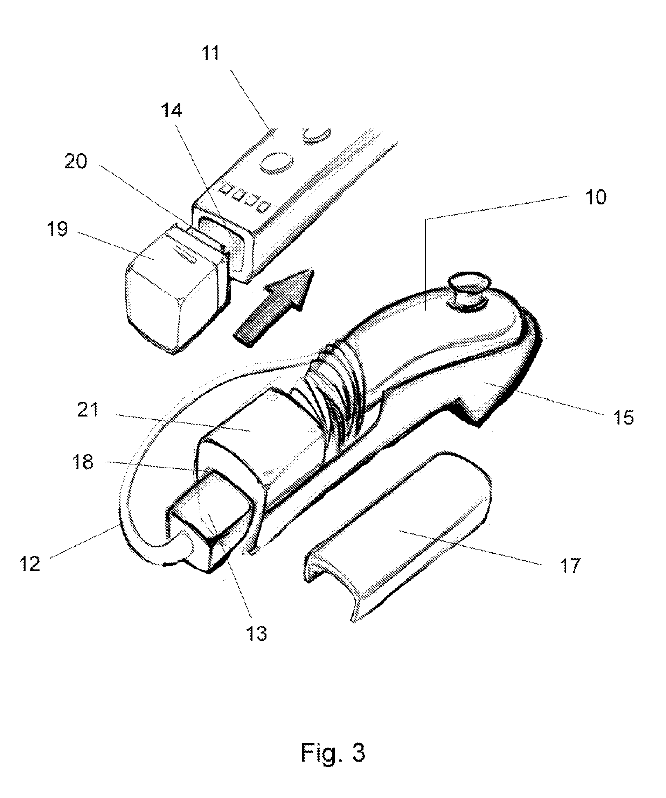

Fig. 3 shows cradle 15 having its cover 17 removed to reveal a transmitter 21 situated therebeneath. It is into the transmitter 21 that the socket 18 extends. The cradle 15 receives the proprietary Nunchuk^{™} attachment 10. The standard cable 12 is ravelled up somewhat about the Nunchuk^{™} attachment 10 and/or between the Nunchuk^{™} 10 and the transmitter 21 and packed into the space to be concealed by the cover 17. A length of the cable 12 extends from the cradle to enable the plug 13 to be inserted into socket 18 as depicted.

Fig. 3 also shows the receiver 19 having its plug 20 aligned for engagement with socket 14 of the remote controller 11. The transmitter 21 and receiver 19 typically communicate wirelessly with one another in the 2.4 GHz multi-channel RF bandwidth of 2402 - 2478 MHz.

Both the transmitter and receiver include batteries and battery state indication LEDs to indicate (perhaps by flashing) when battery replacement is required.

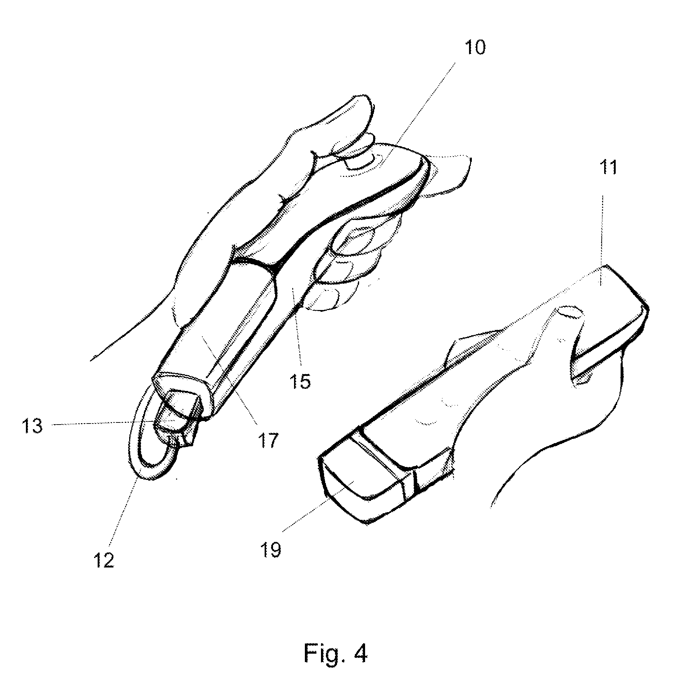

As shown in Fig. 4, the Nunchuk^{™} attachment 10 is received by the cradle 15 in such manner that its control switch is exposed for a user-manipulation at the opening 16.

The remote controller 11 together with its attached receiver 19 is manipulated by one hand, whereas the Nunchuk^{™} attachment 10 together with cradle 15 and cover 15 (concealing the transmitter 21) is manipulated by the other hand without a cumbersome wire extending between the two hand-held devices.

It should be appreciated that modifications and alterations obvious to those skilled in the art are not to be considered as beyond the present invention. For example, the cradle 15 and transmitter 21 could be so configured that no length of cable 12 need be exposed outside of the cradle.

## Claims

1. A system for controlling a game console, comprising:
a first hand-held controller comprising a first transmitter for wirelessly transmitting first control signals corresponding to user input at the first controller to the game console; and
a second hand-held controller;
**characterised in that:**
the first controller comprises a receiver and the second controller comprises a transmitter for wirelessly transmitting second control signals corresponding to user input at the second controller to the receiver, and the receiver is tuned to receive said second control signals from the second transmitter and further **characterised in that** the first transmitter relays the second control signals to the game console.

2. The system of Claim 1, further **characterised in that** the receiver is plugged into the first controller.

3. The system of Claim 1, further **characterised in that** the second controller is plugged into the second transmitter.

4. The system of Claim 3, further **characterised by** a cradle receiving the second controller.

5. The system of Claim 4, further **characterised in that** the second transmitter is located in the cradle.

6. The system of Claim 5, further **characterised in that** the second transmitter comprises a socket, and the second controller has extending from it a cable having a plug inserted into the socket.

7. The system of Claim 6, further **characterised in that** the cradle comprises a cover for covering at least a portion of the cable.

8. A set of components for use with proprietary game console controllers, the proprietary game console controllers including: a first hand-held controller comprising a first transmitter for wirelessly transmitting first control signals corresponding to user-input at the first controller to the game console, and a socket; and a second hand-held controller comprising a cable with a plug for insertion into the socket of the first controller whereupon the first transmitter would hereinbefore relay second control signals corresponding to user-input at the second controller via the cable, plug and socket to the game console; the set of components **characterised by**:
a wireless receiver having a plug for insertion to the socket;
a cradle for receiving the second controller and including a second transmitter having a second socket into which the plug of the cable is received, the second transmitter transmitting said second control signals; wherein:
the receiver is tuned to receive the second control signals and wherein the first transmitter also transmits the second control signals to the game console.

9. The set of components of Claim 8, further **characterised in that** the cradle comprises a cover for covering at least a portion of the cable.
